(19) Europäisches Patentamt / European Patent Office / Office européen des brevets

(11) **EP 2 728 716 B1**

(12) **EUROPEAN PATENT SPECIFICATION**

(45) Date of publication and mention
of the grant of the patent:
**12.09.2018 Bulletin 2018/37**

(51) Int Cl.:
***H02K 7/02*** *(2006.01)*

(21) Application number: **13004761.6**

(22) Date of filing: **02.10.2013**

(54) **Flywheel power storage system**

Schwungradleistungsenergiespeichersystem

Système de stockage d'énergie par volant d'inertie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2012 JP 2012240718**

(43) Date of publication of application:
**07.05.2014 Bulletin 2014/19**

(73) Proprietor: **Kabushiki Kaisha Kobe Seiko Sho
(Kobe Steel, Ltd.)
Kobe-shi, Hyogo 651-8585 (JP)**

(72) Inventors:
• **Inoue, Kenichi
Kobe-shi, Hyogo, 651-2271 (JP)**
• **Inoue, Koji
Kobe-shi, Hyogo, 651-2271 (JP)**

(74) Representative: **Müller-Boré & Partner
Patentanwälte PartG mbB
Friedenheimer Brücke 21
80639 München (DE)**

(56) References cited:
WO-A1-86/04191    JP-A- H10 281 050
US-A- 5 721 461

EP 2 728 716 B1

## Description

BACKGROUND OF THE INVENTION

1. Field of the Invention

The present invention, relates to a flywheel power storage system that converts electric power supplied from the outside into the rotational kinetic energy of a rotary body and stores the power or converts the rotational kinetic energy of the rotary body into electric power and outputs the power to the outside.

2. Description of the Related Art

Japanese Unexamined Patent Application Publication No. 10-285834 describes a flywheel power storage system (hereinafter also simply referred to as a "power storage system") mounted in a moving vehicle, such as an electric vehicle. The power storage system includes a motor capable of functioning as a generator and a rotary body (a flywheel) attached to the main shaft (a rotation drive shaft) of the motor. The motor is a permanent magnet synchronous electric motor. In addition, the rotary body is a disk-shaped member that extends radially outward in a direction perpendicular to the main shaft and that has a large inertia moment.

Upon receiving electric power (electrical energy), the power storage system causes the motor to increase the rotating speed of the rotary body and converts the supplied electric power into the rotational kinetic energy of the rotary body. Thus, the power storage system stores the power in the form of rotational kinetic energy. In contrast, to output the stored electric power, the power storage system causes the motor to function as a generator. Thus, the rotational kinetic energy of the rotary body is converted into electrical energy, which is output. At that time, since the rotational kinetic energy of the rotary body decreases with the amount of the electrical energy output, the rotational speed of the rotary body decreases.

In such a power storage system, the rotary body having a large inertia moment is rotated at high speed. Accordingly, if, for example, a moving vehicle (e.g., an electric vehicle) having the power storage system mounted therein rapidly changes the moving direction thereof, a significantly large inertia force generated by the inertia moment of the rotary body (a precession movement) is exerted on the moving vehicle. Thus, the motion of the moving vehicle becomes unstable.

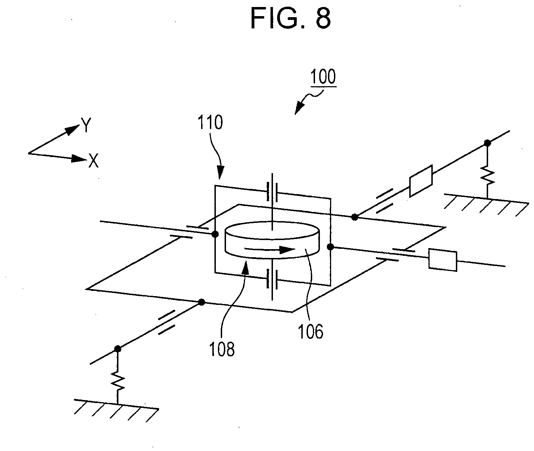

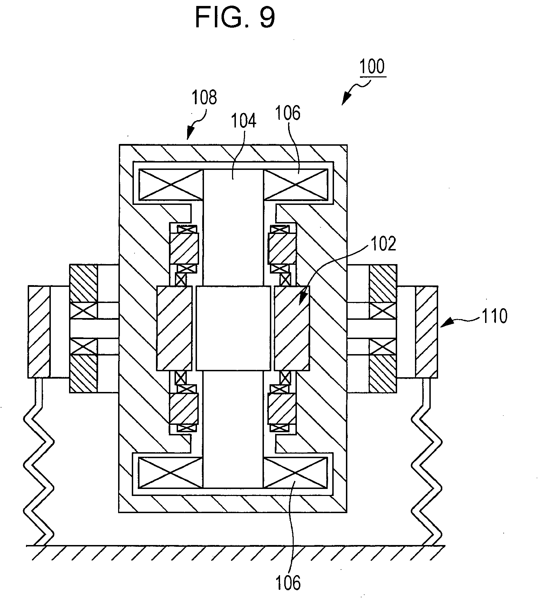

Accordingly, a power storage system described in Japanese Unexamined Patent Application Publication No. 2005-65411 has been developed. As illustrated in Figs. 8 and 9, the power storage system includes a motor 102 capable of functioning as a generator, a flywheel unit 108 having a rotary body 106 attached to a main shaft 104 of the motor 102, and a support member 110 having a gimbal structure that supports the flywheel unit 108 in a rotatable manner about two axes (an X-axis and a Y-axis illustrated in Fig. 8) that are perpendicular to each other in a horizontal plane.

In a power storage system 100, the support member 110 having the gimbal structure supports the flywheel unit 108. Thus, the flywheel unit 108 can freely change the posture thereof with respect to the moving vehicle. Accordingly, if the moving vehicle having the power storage system 100 mounted therein rapidly changes the moving direction thereof, the flywheel unit 108 (the rotary body 106 rotating at high speed) changes the posture thereof with respect to the moving vehicle. In this manner, the inertia force (the precession movement) caused by the inertia moment of the flywheel unit 108 (the rotary body 106 rotating at high speed) can be prevented from being exerted on the moving vehicle.

SUMMARY OF THE INVENTION

However, the power storage system 100 including the support member 110 having such a gimbal structure requires a complicated support structure of the support member 110. In addition, by providing the support member 110 having such a complicated structure, the size of the power storage system 100 is increased.

US 5 721 461 A discloses an alternator which includes a flywheel for storing kinetic energy according to the preamble of independent claim 1.

JP H10 281050 A discloses a flywheel device. Motor generators are so designed that they rotate flywheels having the same inertia moment at the same speed and in reverse direction.

WO 86/04191 A1 discloses a generator which includes a stator assembly for generating a magnetic field within an interior region and a rotor responsive to the input drive and the magnetic field for generating the output generator voltage.

Accordingly, it is an object of the present invention to provide a flywheel power storage system including the rotary body and having a simplified structure capable of reducing the inertia force caused by the rotation of the rotary body and exerted on the moving vehicle having the power storage system mounted therein.

According to an embodiment of the present invention, a flywheel power storage system for storing supplied electric power in the form of rotational kinetic energy includes a main shaft extending in a certain direction, a pair of rotary bodies attached to the main shaft, where the rotary bodies counter rotate about the main shaft, and a drive unit configured to synchronize the rotation periods of the rotary bodies rotating about the main shaft with each other.

According to such a configuration, by using such a simplified structure that a pair of the rotary bodies counter rotate so that the rotation periods are synchronized with each other, the inertia force exerted from the power storage system to a moving vehicle having the power storage system mounted therein when the moving vehicle changes its moving direction (the inertia force caused by the rotation of the rotary body) can be effectively reduced. That is, since the two rotary bodies counter rotate so that the rotation periods are synchronized with each other, the inertia moments cancel each other out and, thus, the sum of the angular momenta is reduced. In this manner, the inertia force exerted from the power storage system on a moving vehicle having the power storage system mounted therein when the moving vehicle changes its moving direction (the inertia force caused by the rotation of the rotary body) can be effectively reduced.

The flywheel power storage system further include a stator with both end portions each having the main shaft attached thereto, where the main shaft outwardly extends from each of the end portions and the stator is made of a magnetic material. Each of the rotary bodies can be made of a magnetic material and have a substantially disk shape extending radially from the main shaft in a direction perpendicular to the main shaft. The rotary bodies are disposed with the stator therebetween. The drive unit includes a pair of exciting coils each disposed on one of the end portions, where the main shaft passes through center core portions of the exciting coils, and the exciting coils cause the rotary bodies to generate a rotation force based on a magnetic resistance between the stator and each of the rotary bodies when being excited by input and output of the electric power to and from the flywheel power storage system.

In this manner, by using a simplified structure including the main shaft, the pair of substantially disk-shaped rotary bodies attached to the main shaft, and the stator attached to the main shaft and having the exciting coils disposed thereon, a decrease in the stored electric power (the rotational kinetic energy) over time can be reduced and, in addition, vibration caused by the rotation of the rotary bodies can be reduced. That is, since the rotating member (the rotary body) is simply a substantially disk-shaped magnetic member without having a permanent magnet and an exciting coil, hysteresis loss and eddy current loss caused by a magnetic field formed by a permanent magnet do not occur in, for example, the stator and the exciting coil when input and output of electric power to and from the flywheel power storage system are stopped and, thus, the rotary body enters a free rotation state (a free wheel state) in which the rotary body is not driven by the drive unit. In addition, since the need for a brush for supplying an excitation current to the rotary body is eliminated, friction caused by the brush does not occur in the rotary body. Accordingly, the occurrence of hysteresis loss and eddy current loss when the rotary body is in a free wheel state and a decrease in the rotational speed of the rotary body caused by friction of the brush over time can be prevented. Furthermore, since a permanent magnet is not used, cogging torque is not generated when the rotary body is in a free wheel state. Accordingly, vibration caused by cogging torque and a decrease in the rotational speed of the rotary body caused by cogging torque can be prevented.

In the flywheel power storage system, the rotary body is rotatingly driven by the magnetic attractive force caused by a change in the magnetic resistance between the stator and the rotary body when the exciting coils are excited. That is, a so-called switched reluctance (SR) technique is employed. To create a change in the magnetic resistance, according to the invention the following particular configuration is employed. That is, the stator has a plurality of through-holes that pass therethrough in a direction in which the main shaft extends and that are arranged on a circumference of a circle having the center at the main shaft and a predetermined radius with a spacing therebetween in the circumferential direction, and each of the rotary bodies have a facing surface that faces the stator and a plurality of protrusions that protrude, toward the stator, from the facing surface on the circumference of the circle having the predetermined radius at positions corresponding to the through-holes.

In such a configuration, the magnetic resistance between the stator and the rotary body when the exciting coil is excited varies with a change in the rotational position of the rotary body relative to the stator. The magnetic attractive force caused by the change in magnetic resistance is exerted on the rotary body and, thus, the rotary body is rotatingly driven. This operation is described in more detail below.

By allowing each of the protrusions to protrude from the facing surface that faces the stator toward the stator (i.e., allowing the protrusion to be disposed closer to the stator), the lines of magnetic flux generated when the exciting coil is excited concentrate on the protrusion. In such a state, the magnetic resistance is maximized when the protrusions of the rotary body are located directly in front of the through-holes of the stator. In contrast, when the protrusions are located directly in front of the non-opening portions of the stator (i.e., the portions each located between two neighboring through-holes), the magnetic resistance is minimized. At that time, the attractive force is exerted in such a direction that the magnetic resistance decreases. Accordingly, by exciting the exciting coil when the protrusions directly face the through-holes of the stator, the magnetic attractive force is exerted on the rotary body in such a direction that the protrusions move toward the non-opening portions. Thus, the rotary body rotates.

At that time, if the shapes and weights of the rotary bodies are the same or substantially the same, the sum of the angular momenta of the two rotary bodies is zero or a value close to zero. Accordingly, the inertia force exerted from the power storage system on a moving vehicle having the power storage system mounted therein when the moving vehicle changes its moving direction (the inertia force caused by the rotation of the rotary body) can be reduced more.

It is desirable that each of the stator and the pair of rotary bodies be formed by pressing soft magnetic powders each coated with an electric insulating film together.

In such a configuration, even when the lines of magnetic flux that pass through the inside of the stator and the rotary body vary, an eddy current negligibly flows therein, since each of the soft magnetic powders that constitutes the stator and the rotary body is coated by an electric insulating film and, thus, is electrically insulated from another soft magnetic powder. In this manner, eddy current loss occurring in each of the stator and the rotary bodies can be effectively prevented.

It is desirable that each of the rotary bodies have a main rotary body that has a substantially disk shape extending radially in a direction perpendicular to the direction in which the main shaft extends and that is made of soft magnetic powders and one of a reinforcing portion formed by tightly winding a belt-like member around an outer peripheral surface of the main rotary body so as to surround the main shaft in the circumferential direction in the form of a single layer or multiple layers and a tubular portion that surrounds the outer peripheral surface from the outer side.

In such a configuration, since one of the reinforcing portion and the tubular portion surrounds the main rotary body formed of soft magnetic powders from the outer side in the radial direction, the strength of the main rotary body against the force exerted on the rotary main body outwardly in the radial direction can be increased. Thus, when the main rotary body is rotating about the main shaft at high speed, rupture or bursting of the main rotary body caused by a centrifugal force can be reliably prevented.

Alternatively, if each of the main rotary bodies has a tubular portion having a predetermined thickness, the weight of the outer peripheral portion of the rotary body is increased and, thus, the inertia moment of the rotary body is increased. In this manner, a decrease in the rotational speed of the rotary body in a free wheel mode over time can be reduced more.

In the flywheel power storage system, it is desirable that each of the exciting coils be formed by winding a belt-like electric conductive wiring member so that a thickness direction of the belt-like electric conductive wiring member is the same as the radial direction of the exciting coil.

As described above, by forming the exciting coil by winding a belt-like electric conductive wiring member in a "flatwise" manner, the lines of magnetic flux in a magnetic field generated when the exciting coil is excited can pass through the electric conductive wiring member in the width direction of the electric conductive wiring member that forms the exciting coil. Accordingly, the occurrence of an eddy current can be prevented. In this manner, a decrease in the rotational speed (the rotational kinetic energy) of the rotary body due to the occurrence of the eddy current can be reduced. In addition, by using an electric conductive wiring member that has a belt shape, a sufficient cross-sectional area can be provided. In this manner, heat generated when an electric current flows in the electric conductive wiring member can be reduced.

In such a case, by setting the thickness of the conducting wiring member to smaller than a skin depth corresponding to the frequency of an electric current input and output to and from the exciting coil, the occurrence of an eddy current in the conducting wiring member when the magnetic lines in a magnetic field generated by the exciting coil pass through the conducting wiring member can be prevented more. That is, when an alternating current having a predetermined frequency or higher flows in a coil formed by winding a belt-like conducting wiring member, a region which the lines of magnetic flux can enter is a region from the surface of the conducting wiring member to the skin depth. Accordingly, by setting the thickness of the conducting wiring member to smaller than or equal to the skin depth, the occurrence of an eddy current when the lines of magnetic flux enter the conducting wiring member can be prevented.

Each of the rotary bodies may be rotatably attached to the main shaft via one of a magnetic bearing and an air bearing.

According to such a configuration, the rotary body is not in contact with the main shaft. Thus, the rotational friction occurring between the rotary body and the main shaft when the rotary body rotates can be effectively reduced. In addition, since the main shaft is not in contact with the rotary body, the number of maintenance operations (e.g., replacement of a part) required due to, for example, wearing can be reduced.

It is desirable that the drive unit include a control unit that controls the electric power input and output to and from the exciting coil and a detection unit that detect the rotational speed of each of the rotary bodies. In addition, it is desirable that the control unit control an electric current input and output to and from each of the exciting coils on the basis of the rotational speed detected by the detection unit so as to synchronize rotation periods of the rotary bodies with each other.

According to such a configuration, since the state in which the rotation periods of the rotary bodies are synchronized with each other can be maintained, a state in which the sum of the angular momenta of the two rotary bodies is minimized can be maintained.

As described above, the present invention can provide a flywheel power storage system including a rotary body and having a simplified structure capable of reducing the inertia force caused by the rotation of the rotary body and exerted on the moving vehicle including the power storage system.

BRIEF DESCRIPTION OF THE DRAWINGS

Fig. 1 is a cross-sectional view of a flywheel power storage system according to an exemplary embodiment;

Fig. 2 is a side view of a stator with the main shaft being attached;

Fig. 3 is a side view of a rotary body on the side of a facing surface;

Fig. 4 is a cross-sectional view taken along a line IV - IV of Fig. 3;

Fig. 5 is a side view of the stator with the main shaft and an exciting coil attached thereto;

Fig. 6 is a cross-sectional view taken along a line VI - VI of Fig. 5;

Figs. 7A to 7C illustrate acceleration or deceleration of the rotary body of the flywheel power storage system;

Fig. 8 is a schematic illustration of the configuration of an existing flywheel power storage system; and

Fig. 9 is a longitudinal sectional view of a flywheel unit taken along the Y-axis direction of Fig. 8.

DESCRIPTION OF THE PREFERRED EMBODIMENTS

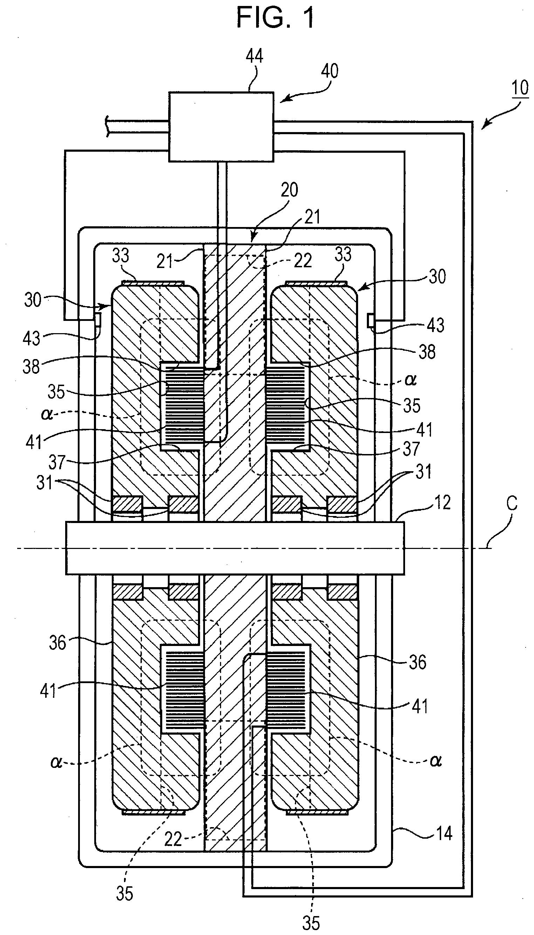

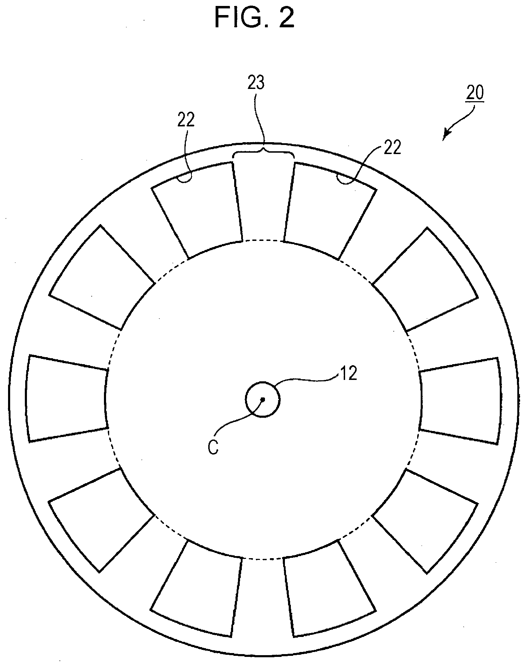

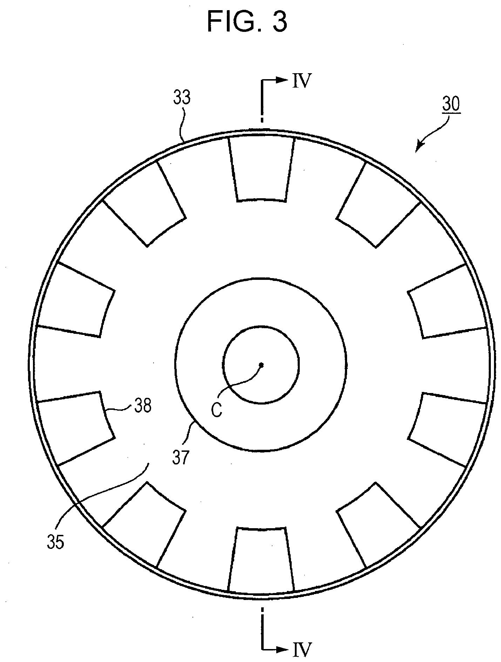

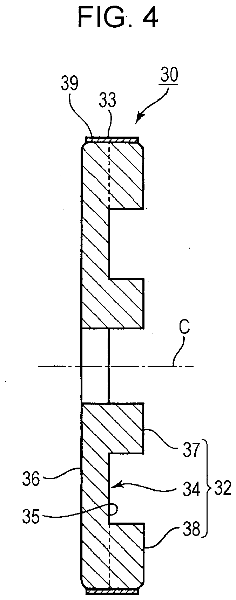

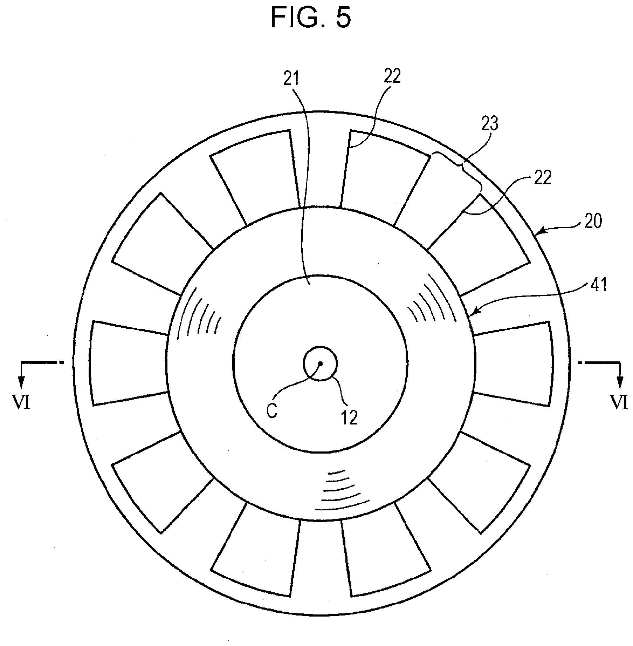

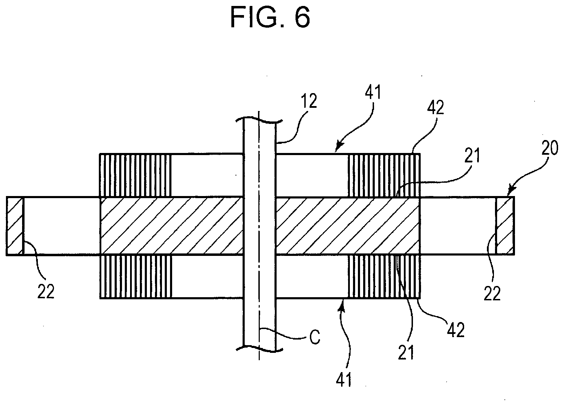

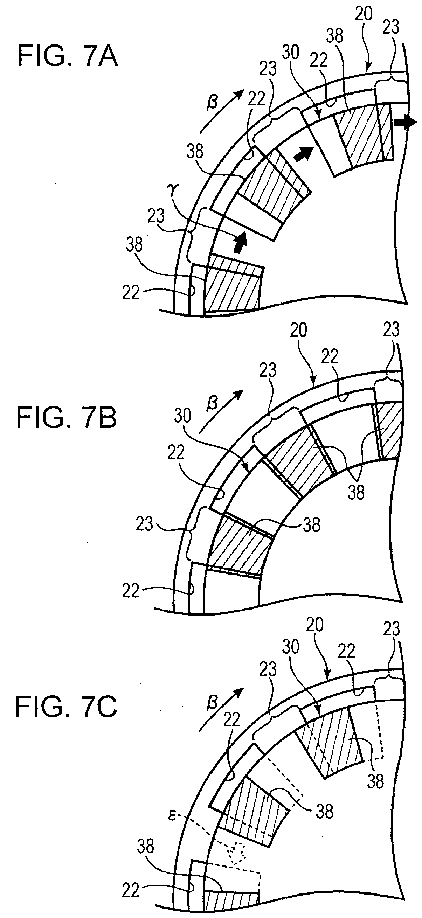

Exemplary embodiments of the present invention are described below with reference to Figs. 1 to 7. Fig. 1 is a cross-sectional view of a flywheel power storage system according to the present exemplary embodiment. Fig. 2 is a side view of a stator with the main shaft being attached. Fig. 3 is a side view of a rotary body on the side of a facing surface. Fig. 4 is a cross-sectional view taken along a line IV - IV of Fig. 3. Fig. 5 is a side view of the stator with the main shaft and an exciting coil attached thereto. Fig. 6 is a cross-sectional view taken along a line VI - VI of Fig. 5. Figs. 7A to 7C illustrate acceleration or deceleration of the rotary body of the flywheel power storage system.

According to the present exemplary embodiment, the flywheel power storage system (hereinafter also simply referred to as a "power storage system") is mounted in the moving vehicle, such as a wheeled vehicle. The flywheel power storage system stores regenerative energy (electric power) generated in the moving vehicle so that the regenerative energy can be input and output. More specifically, according to the present exemplary embodiment, the power storage system is mounted in the moving vehicle including an electromagnetic brake (a regenerative brake). The power storage system converts electric power generated during a braking operation of the electromagnetic brake when the moving vehicle is stopped or decelerated (i.e., regenerative energy) into the rotational kinetic energy of the rotary body and temporarily stores the rotational kinetic energy. Thereafter, if the moving vehicle requires the energy, the power storage system converts the stored rotational kinetic energy of the rotary body into electric power and outputs the electric power.

Note that electric power stored in the power storage system is not limited to the above-described electric power (regenerative energy) generated by the electromagnetic brake provided in moving vehicle. For example, the power storage system may be mounted in a construction machine (a heavy machine), such as a crane vehicle or a loading shovel, and the power storage system may store electric power (the regenerative energy) that can be retrieved when the construction machine loads and unloads structural materials or raises and lowers the arm. It should be noted that the electric power stored in the power storage system is not limited to regenerative energy.

As illustrated in Fig. 1, a power storage system 10 includes a main shaft 12, a stator 20, a pair of rotary bodies 30, 30, a drive unit 40, and a decompression container unit 14.

The main shaft 12 is a member extending in a particular direction (the right - left direction in Fig. 1). According to the present exemplary embodiment, the main shaft 12 has a cylindrical shape having a diameter that is constant along the length in a direction of a center axis C.

The stator 20 is made of a magnetic material. As illustrated in Fig. 2, the stator 20 has a substantially disc shape. The stator 20 has the main shaft 12 that outwardly extends from each of two end surfaces 21 and 21 of the stator 20 in the thickness direction of the stator 20 (the right - left direction in Fig. 1). That is, the main shaft 12 is attached to the stator 20 so as to pass through the center of the stator 20 having a substantially disc shape in the thickness direction and extend from each of the end surfaces 21, 21 in the normal direction.

More specifically, the outline of the stator 20 is circular when viewed in a direction in which the main shaft 12 extends (the direction of the center axis C). The stator 20 has a substantially disc shape that radially extends in a direction perpendicular to the center axis C (the main shaft 12). The stator 20 has a plurality of through-holes 22, 22, ... that pass through the stator 20 in the direction of the center axis C. The through-holes 22, 22, ... are formed in the outer peripheral portion of the stator 20 so as to be arranged in the circumferential direction with a spacing therebetween. That is, the plurality of through-holes 22, 22, ... are arranged with a spacing therebetween on the circumference of a circle having the center at the center axis C (the main shaft 12) and a predetermined radius. According to the present exemplary embodiment, the through-holes 22, 22, ... are arranged at equal intervals in the circumferential direction. The width of each of the through-holes 22 in the circumferential direction is greater than the width of each of the non-opening portions 23 (a portion between any two neighboring through-holes 22 in the circumferential direction). The through-holes 22, 22, ... are the same in shape as viewed in the direction of the center axis C.

The pair of the rotary bodies 30, 30 are made of a magnetic material. The rotary bodies 30, 30 are disposed with the stator 20 therebetween in the direction of the center axis C. Each of the rotary bodies 30 is attached to the main shaft 12 in a rotatable manner about the main shaft 12. According to the present exemplary embodiment, the shapes and the weights of the two rotary bodies 30 are the same. In addition, each of the rotary bodies 30 is attached to the main shaft 12 via a magnetic bearing 31. Note that it is only required that the rotary body 30 be rotatably attached to the main shaft 12. That is, the structure of the rotary body 30 is not limited to a structure in which the rotary bodies 30 is attached to the main shaft 12 via the magnetic bearing 31. For example, the rotary body 30 may be attached to the main shaft 12 via a bearing of another type, such as an air bearing.

In addition, the two rotary bodies 30, 30 counter rotate during charging and discharging in the power storage system 10. At that time, when the rotary body 30 moves from a stationary mode to a counter rotation mode, an existing technique used for a switched reluctance (SR) motor can be employed.

The rotary body 30 has a substantially disc shape radially extending from the center axis C in the direction perpendicular to the center axis C. More specifically, as illustrated in Figs. 3 and 4, each of the rotary bodies 30 includes a main rotary body 32 and a reinforcing portion 33. The main rotary body 32 includes a base portion 34 and a center protrusion 37 and a plurality of peripheral protrusions 38, 38, ... that protrude from the base portion 34 toward the stator 20.

The base portion 34 is a substantially disc-shaped portion that extends radially from the center axis C in the direction perpendicular to the center axis C and that has a predetermined uniform thickness. The base portion 34 includes a facing surface 35 and an external surface 36. The facing surface 35 is a surface of the base portion 34 on one side that faces the stator 20, and the external surface 36 is a surface of the base portion 34 opposite to the facing surface 35.

The center protrusion 37 is a tubular portion that protrudes from a center area of the facing surface 35 of the base portion 34 (a portion adjacent to the center axis C) toward the stator 20 so as to surround the main shaft 12.

The peripheral protrusions 38 protrude, toward the stator 20, from the facing surface 35 of the base portion 34 on the circumference of the circle having a predetermined radius at positions corresponding to the through-holes 22, 22, ... of the stator 20. That is, the number of the peripheral protrusions 38 is the same as the number of the through-holes 22 of the stator 20. The shape of each of the peripheral protrusions 38 is the same or substantially the same as the shape of each of the through-holes 22 of the stator 20 as viewed in the direction of the center axis C. In addition, the length of each of the peripheral protrusions 38 from the facing surface 35 is the same as the length of the center protrusion 37 from the facing surface 35 in the direction of the center axis C. Note that according to the present exemplary embodiment, the size of the through-hole 22 is larger than the size of the peripheral protrusion 38 as viewed in the direction of the center axis C.

When viewed in the direction of the center axis C, an exciting coil 41 attached to the stator 20 is fitted into a donut shaped region surrounded by the peripheral protrusions 38, 38, ..., the center protrusion 37, and the facing surface 35 with a predetermined spacing from each of the peripheral protrusions 38, the center protrusion 37, and the facing surface 35 (refer to Fig. 1).

The reinforcing portion 33 surrounds an outer peripheral surface 39 of the main rotary body 32 (an outer peripheral surface that surrounds the main shaft 12 in the circumferential direction) from the outer side in the radial direction. More specifically, the reinforcing portion 33 is formed by tightly winding a belt-like high-tensile member around the outer peripheral surface 39 of the main rotary body 32 from the outer side in the radial direction in the form of a single layer or multiple layers. According to the present exemplary embodiment, for example, a glass fiber reinforced plastic (GFRP) or a carbon fiber reinforced plastic (CFRP) is used as the belt-like high-tensile member. However, the belt-like high-tensile member is not limited thereto.

The reinforcing portion 33 increases the strength of the main rotary body 32 against the force exerted on the rotary bodies 30 that is rotating at high speed outwardly in the radial direction (i.e., the centrifugal force). That is, since the reinforcing portion 33 surrounds the main rotary body 32 from the outer side in the radial direction, the strength of the main rotary body 32 against the centrifugal force exerted on the rotary body 30 is increased. Thus, when the rotary bodies 30 are rotating about the main shaft 12 at high speed, rupture or bursting of the rotary body 30 caused by a centrifugal force can be reliably prevented.

Note that instead of the reinforcing portion 33 formed from the belt-like high-tensile member that is tightly wound around the main rotary body 32, a tubular member that surrounds the outer peripheral surface 39 of the main rotary body 32 from the outer side and that has a predetermined thickness may be employed. The tubular member can be formed from steel for structural use or a material with a high strength-to-weight ratio, such as stainless steel. By attaching such a tubular member to the outer peripheral surface 39 of the main rotary body 32, the weight of the peripheral portion (an outer circumferential portion) of the rotary body 30 is increased and, thus, the inertia moment of the rotary body 30 can be increased.

The stator 20 and each of the rotary bodies 30 (more precisely, the main rotary body 32) having the above-described structures are formed of a magnetic material in the above-described manner and have a predetermined magnetic characteristic (the magnetic permeability). More specifically, the stator 20 and each of the main rotary bodies 32 is formed by pressing together soft magnetic powders each coated by an electric insulating film. According to the present exemplary embodiment, each of the stator 20 and the main rotary bodies 32 is formed by iron powders each having an electric insulating film (e.g., a phosphate chemical film) thereon. Note that the soft magnetic powders are ferromagnetic metal powders. Examples of the soft magnetic powders include pure iron powders, iron-base alloy powders (e.g., Fe-Al alloy, Fe-Si alloy, sendust alloy, or permalloy powders), and amorphous powders. Such soft magnetic powders can be manufactured by using an existing technique (e.g., by microparticulation through an atomization process or by fine grinding iron oxide and, thereafter, reducing the iron oxide). In addition, it is particularly desirable that the soft magnetic powders be metal powders, such as pure iron powders, iron-base alloy powders, or amorphous powders. This is because in general, metal powders have a higher saturated magnetic flux density than the other powders if the magnetic permeability values are the same.

The stator 20 and each of the main rotary bodies 32 can be formed of such soft magnetic powders using an existing technique, such as powder compacting formation.

Alternatively, the stator 20 and each of the main rotary bodies 32 may be formed by pressing a mixture of soft magnetic powders and non-magnetic powders together. In such a case, the blend ratio of the soft magnetic powders to the non-magnetic powders can be relatively easily controlled. By controlling the blend ratio to an appropriate value, a desired magnetic characteristics of the stator 20 and each of the rotating main bodies 32 can be easily obtained. Still alternatively, the stator 20 and each of the main rotary bodies 32 may be formed by metal molding of, for example, the soft magnetic powders each coated by an electric insulating film together with connecting media.

The drive unit 40 includes a pair of the exciting coils 41, 41, a detection unit 43 that detects the rotational speed of each of the rotary bodies 30, and a current control unit (a control unit) 44 that controls an electric current input and output to and from each of the exciting coils 41. The drive unit 40 causes the rotary bodies 30 to counter rotate so that the rotation period of one of the rotary bodies 30 around the main shaft 12 is synchronized with that of the other rotary body 30.

Each of the exciting coils 41 is disposed on one of the end surfaces 21, 21 of the stator 20 in the direction of the center axis C so as to surround the main shaft 12. If the exciting coil 41 is excited by input and output of the power to and from the power storage system 10, the exciting coil 41 exerts a rotational force caused by magnetic resistance between the stator 20 and the rotary body 30 on the rotary body 30.

As illustrated in Figs. 5 and 6, the exciting coil 41 is a so-called pancake coil having a band-like conducting wiring member 42 wound so that the thickness direction of the band-like conducting wiring member 42 (the direction normal to the principal surface) is the same as the radial direction of the exciting coil 41 (i.e., in a flatwise manner). The inner diameter of the exciting coil 41 is greater than the outer diameter of the center protrusion 37 of the rotary body 30. In addition, the outer diameter of the exciting coil 41 is less than the diameter of a circle formed by sequentially connecting the end portions of the peripheral protrusions 38 of the rotary body 30 adjacent to the center axis C and is substantially the same as the diameter of a circle formed by sequentially connecting the end portions of the through-holes 22 of the stator 20 adjacent to the center axis C.

The exciting coil 41 having such a structure is attached to the stator 20 so that one of the end portions of the exciting coils 41 in the center axis direction of the exciting coil 41 is in contact with the end surface 21 of the stator 20 that faces the rotary body 30 (refer to Figs. 1 and 6).

The band-like conducting wiring member 42 is formed of an electrical conducting material. The width of the band-like conducting wiring member 42 in the length direction is constant. The thickness of the band-like conducting wiring member 42 is smaller than the skin depth $\delta$ corresponding to the frequency of an electric current input and output to and from the exciting coil 41. The skin depth $\delta$ can be calculated as follows:

$$\delta = \sqrt{\frac{\rho}{\pi \cdot f \cdot \mu(B)}} \quad \cdots (1)$$

where $\rho$ represents the electric conductivity (S/m), $\mu$ represents the magnetic permeability (H/m), and f represents the frequency of the alternating current (Hz).

The detection unit 43 detects the rotational speed of each of the rotary bodies 30 in a contact manner or in a contactless manner. For example, a hall element or a rotary encoder can be used as the detection unit 43. The detection unit 43 is connected to the current control unit 44 and outputs a rotational speed signal that varies with the detected rotational speed of each of the rotary bodies 30 to the current control unit 44.

The current control unit 44 supplies an electric current of a predetermined frequency to each of the exciting coils 41 so that the two rotary bodies 30 counter rotate and the rotational periods of the rotary bodies 30 about the main shaft 12 are synchronized. More specifically, upon detecting a shift of the rotational period of one of the rotary bodies 30 from that of the other on the basis of the rotational speed signals from the detection unit 43, the current control unit 44 supplies an electric current to each of the exciting coils 41 so that the rotational periods are synchronized. This operation is described in more detail below.

If each of the exciting coils 41 receives electric power and is excited, a magnetic field having lines of magnetic flux (refer to "a" in Fig. 1) is formed between the stator 20 and each of the rotary bodies 30 that are disposed so as to sandwich the exciting coils 41 and that are formed of a magnetic material. The lines of magnetic flux encircle the exciting coils 41. The lines of magnetic flux pass through a path so that the magnetic resistance reduces. Accordingly, the lines of magnetic flux enter the stator 20 through the top ends of the peripheral protrusions 38 (or the center protrusion 37) of the rotary body 30 located in the vicinity of the stator 20. Thereafter, the lines of magnetic flux pass through the inside of the stator 20 and pass from a portion adjacent to the center axis C (or a portion adjacent to the peripheral edge portion) towards the top end of the center protrusion 37 (or the peripheral protrusions 38). Finally, the lines of magnetic flux enter the inside of the rotary body 30. At that time, the magnetic resistance between the peripheral protrusions 38 of the rotary body 30 and the stator 20 varies in accordance with the rotational position of the rotary body 30 relative to the stator 20. More specifically, the magnetic resistance is maximized when the peripheral protrusions 38 of the rotary body 30 are located directly in front of the through-holes 22 of the stator 20. As the peripheral protrusions 38 move closer to the positions in front of the non-opening portions 23 of the stator 20, the magnetic resistance decreases. When the peripheral protrusions 38 are located directly in front of the non-opening portions 23 (refer to Fig. 7B), the magnetic resistance is minimized. The lines of magnetic flux attempt to pass through a path having a smaller magnetic resistance and, thus, a magnetic attractive force acts on the rotary bodies 30.

Accordingly, as illustrated in Figs. 7A to 7C, in order to accelerate the rotary body 30 (i.e., in order to increase the rotational speed of the rotary body 30), the current control unit 44 supplies an electric current to the exciting coil 41 to excite the exciting coil 41 if the peripheral protrusions 38 are shifted from the positions directly in front of the through-holes 22 in a rotational direction β. In this manner, a magnetic attractive force is exerted on the rotary body 30 (the peripheral protrusions 38) in the rotational direction β (refer to an arrow γ in Fig. 7A). Thereafter, as illustrated in Fig. 7B, when the rotary body 30 rotates to the position at which the peripheral protrusions 38 reach the corresponding positions directly in front of the non-opening portions 23, the current control unit 44 stops supplying the electric current to the exciting coil 41. In this manner, a force in the rotational direction β (the magnetic attractive force γ) is exerted on the rotary body 30 for a period of time from the time the electric current is supplied to the time the supply of the electric current is stopped. As a result, the rotational speed of the rotary body 30 increases and, thus, the rotational kinetic energy of the rotary body 30 increases. Thereafter, no force is exerted on the rotary body 30 in the rotational direction. However, as illustrated in Fig. 7C, the rotary body 30 continues to rotate due to the inertia force. Subsequently, as illustrated in Fig. 7A, when the rotary body 30 rotates and reaches again the position at which the peripheral protrusions 38 are shifted from the positions directly in front of the corresponding through-holes 22 in the rotational direction β, the current control unit 44 starts supplying an electric current to the exciting coil 41 to excite the exciting coil 41 again. By repeating such operations, the rotational speed of the rotary body 30 increases.

In contrast, in order to decelerate the rotary body 30 (in order to decrease the rotational speed of the rotary body 30), as illustrated in Fig. 7C, the current control unit 44 supplies an electric current to the exciting coil 41 to excite the exciting coils 41 if the peripheral protrusions 38 are shifted from the positions directly in front of the corresponding non-opening portions 23 in the rotational direction β. In this manner, a magnetic attractive force ε is exerted on the rotary body 30 (the peripheral protrusions 38) in the direction opposite to the rotational direction β. Subsequently, if the peripheral protrusions 38 of the rotary body 30 reach the positions directly in front of the corresponding through-holes 22, the current control unit 44 stops supplying the electric current to the exciting coil 41. By repeating such operations, the rotational speed of the rotary body 30 decreases.

As described above, the current control unit 44 accelerates or decelerates one of (or both) the rotary bodies 30 to control the rotational speed. In this manner, the rotation periods of the two rotary bodies 30, 30 are synchronized.

In the power storage system 10 according to the present exemplary embodiment, since the two rotary bodies 30 counter rotate and, in addition, the rotation periods are synchronized, the inertia moments of the rotary bodies 30 are canceled each other out and, thus, the sum of the angular momenta can be reduced. Accordingly, the inertia force exerted from the power storage system 10 on the moving vehicle having the power storage system 10 mounted therein when the moving vehicle changes its moving direction (the inertia force caused by the rotation of the rotary body) can be effectively reduced. In addition, in the power storage system 10 according to the present exemplary embodiment, since the shape and the weights of the rotary bodies 30, 30 are the same, the sum of the angular momenta of the two rotary bodies 30 is zero or a value very close to zero. As a result, the inertia force exerted from the power storage system 10 on the moving vehicle having the power storage system 10 mounted therein when the moving vehicle changes its moving direction (the inertia force caused by the rotation of the rotary body 30) can be effectively reduced.

Furthermore, the current control unit 44 supplies the electric power supplied from the moving vehicle (i.e., the regenerative energy) to the exciting coils 41 and outputs the electric power stored in the power storage system 10 to the outside.

More specifically, in case of charge (i.e., when electric power (regenerative energy) is supplied from the moving vehicle), the current control unit 44 supplies the electric power (the electric current) to the exciting coils 41 so that the electric power is converted into the rotational kinetic energy of the rotary bodies 30. More specifically, upon receiving electric power from the moving vehicle, the current control unit 44 supplies electric currents to the exciting coils 41 so that the rotational speed of each of the rotary bodies 30 is increased in the same manner as described above. Thus, the rotational speed of each of the rotary bodies 30 is increased, and the electric power supplied from the moving vehicle is converted into the rotational kinetic energy of the rotary bodies 30, which is stored in the power storage system.

In contrast, in case of discharge (i.e., when the electric power stored in the power storage system 10 is output to the outside), the current control unit 44 can retrieve the output of electric power in the following most simplified manner, for example.

When the current control unit 44 supplies a direct current to each of the exciting coils 41, the rotary body 30 rotates with respect to the stator 20 and, thus, the magnetic resistance between the stator 20 and the rotary body 30 (the peripheral protrusions 38) varies. Accordingly, the inductance of each of the exciting coils 41 periodically varies. At that time, since the potentials of both the ends of the exciting coil 41 (both the ends of the band-like conducting wiring member 42 that constitutes the exciting coil) periodically vary, the potentials can be retrieved as an alternating current and be output. This operation can be described from the basics of Electromagnetics as follows. That is, when a direct current flows in a coil wound around an iron core and if the iron core is attempted to be pulled out from the coil, a restorative force is generated. At that time, if the iron core is forcibly pulled out, a back electromotive force is generated in the coil and, thus, a reverse current flows into a DC power supply. That is, energy flows back to the DC power supply. As a whole, the kinetic energy for pulling out the iron core (external work) is converted into electrical energy (= reverse current × power supply voltage). At that time, by using a commutator, the reverse current can be externally retrieved. In this manner, the electric power stored in the form of the rotational kinetic energy of the rotary bodies 30 can be output from the power storage system 10.

As described above, if electric power is supplied from the moving vehicle to the power storage system 10, the rotary bodies 30, the exciting coils 41, the stator 20, and the main shaft 12 function as a switched reluctance motor (an SR motor). Thus, the rotational speeds of the rotary bodies 30 that are rotating are increased, and the electric power is converted into the rotational kinetic energy of the rotary bodies 30 and is stored. In contrast, in order to output the electric power, the rotary bodies 30, the exciting coils 41, the stator 20, and the main shaft 12 function as a generator. Thus, the rotational speeds of the rotary bodies 30 are decreased. The rotational kinetic energy of the rotary bodies 30 corresponding to the decreased amounts of the rotational speeds is converted into electric power, which in turn is output.

The decompression container unit 14 surrounds the stator 20 and the pair of the rotary bodies 30, 30 so as to contain the stator 20 and the pair of the rotary bodies 30, 30. The internal pressure of the decompression container unit 14 is maintained at vacuum or a low pressure close to vacuum. In this manner, the friction of air against the rotary bodies 30 that are rotating at high speed can be reduced.

According to the above-described power storage system 10, by using the simplified structure in which the two rotary bodies 30, 30 counter rotate so that the rotation periods thereof are synchronized, the inertia force exerted from the power storage system 10 on the moving vehicle having the power storage system 10 mounted therein when the moving vehicle changes its moving direction (i.e., the inertia force based on the rotation of the rotary bodies 30) can be effectively reduced. That is, according to the power storage system 10 of the present exemplary embodiment, since the two rotary bodies 30, 30 counter rotate so that the rotation periods thereof are synchronized, the inertia moments of the rotary bodies 30, 30 can be canceled each other out and, thus, the sum of the angular momenta can be reduced. In this manner, the inertia force exerted from the power storage system 10 on the moving vehicle having the power storage system 10 mounted therein when the moving vehicle changes its moving direction (i.e., the inertia force based on the rotation of the rotary bodies 30) can be effectively reduced.

In addition, according to the power storage system 10 of the present exemplary embodiment, by using a simplified structure including the main shaft 12, the pair of substantially disk-shaped rotary bodies 30, 30 attached to the main shaft 12, and the stator 20 having the exciting coils 41, 41 disposed thereto, a decrease in the stored electric power (the rotational kinetic energy) over time can be reduced and, in addition, vibration caused by the rotation of the rotary bodies 30 can be reduced. That is, by using a structure in which the main shaft 12, the stator 20, the exciting coil 41, and the rotary body 30 are operable as an axial-gap SR motor, a decrease in the stored electric power (the stored rotational kinetic energy) over time can be reduced and, in addition, vibration caused by the rotation of the rotary bodies 30 can be reduced. More specifically, the rotating member (the rotary body 30) is simply a substantially disk-shaped magnetic member without having a permanent magnet and an exciting coil. Accordingly, when input and output of electric power to and from the power storage system 10 are stopped and, thus, the rotary body 30 enters a free rotation state (a free wheel state) in which the rotary body 30 is not driven by the drive unit, hysteresis loss and eddy current loss caused by the rotating magnetic field formed by a permanent magnet do not occur in, for example, the stator 20 and the exciting coil 41. In addition, since the need for a brush for supplying an excitation current to the rotary body 30 is eliminated, friction caused by the brush does not appear to the rotary body 30. Accordingly, the occurrence of hysteresis loss and eddy current loss when the rotary body 30 is in a free wheel state and a decrease in the rotational speed of the rotary body 30 caused by friction of the brush over time (i.e., a decrease in the rotational kinetic energy stored in the rotary body 30) can be prevented. Furthermore, since a permanent magnet is not used, cogging torque is not generated when the rotary body 30 is in a free wheel state. Accordingly, vibration caused by cogging torque and a decrease in the rotational speed of the rotary body 30 caused by cogging torque can be prevented. As a result, the power storage system 10 can efficiently maintains the store regenerative energy (the electric power).

According to the power storage system 10 of the present exemplary embodiment, the stator 20 and the rotary bodies 30, 30 (the rotary main bodies 32, 32) are formed of soft magnetic powders each coated with an electric insulating film. Accordingly, even when the lines of magnetic flux that pass through the inside of the stator 20 and the rotary bodies 30 vary, an eddy current negligibly flows therein, since each of the soft magnetic powders that constitutes the stator 20 and the rotary bodies 30 is coated with an electric insulating film and, thus, is electrically insulated from another soft magnetic powder. In this manner, in the power storage system 10, eddy current loss occurring in the stator 20 and each of the rotary bodies 30 can be effectively prevented.

In addition, according to the power storage system 10 of the present exemplary embodiment, even when the magnetic lines in the magnetic field generated when the exciting coil 41 is excited pass through the conducting wiring member 42 that constitutes the exciting coil 41, the occurrence of an eddy current in the conducting wiring member 42 can be prevented, since the thickness of the conducting wiring member 42 is less than or equal to the skin depth. Accordingly, a decrease in the rotational speed (the rotational kinetic energy) of the rotary body 30 caused by the occurrence of an eddy current can be prevented. Furthermore, although the thickness of the conducting wiring member 42 is less than or equal to the skin depth, a desired cross-sectional area of the band-like conducting wiring member 42 can be provided by employing the band-like conducting wiring member 42. Thus, heat generated when an electric current flows in the conducting wiring member 42 can be reduced.

In addition, the exciting coil 41 is formed by winding the conducting wiring member 42 so that the thickness direction of the conducting wiring member 42 is the same as the radial direction of the exciting coil. By causing one of the end portions of the exciting coil 41 (a "pancake" coil) in the direction of the center axis C to be in contact with the stator 20, the heat generated by the exciting coil 41 (the conducting wiring member 42) can be effectively dissipated (heat-conducted) from the contact portion to the stator 20.

Furthermore, according to the power storage system 10 of the present exemplary embodiment, since each of the rotary bodies 30 is rotatably attached to the main shaft 12 via the magnetic bearing 31, the rotational friction between the rotary body 30 and the main shaft 12 occurring when the rotary body 30 is rotating can be effectively reduced. In addition, since the main shaft 12 is not in contact with the rotary body 30, the number of maintenance operations (e.g., replacement of a part) required due to, for example, wearing can be reduced.

It should be noted that a flywheel power storage system according to the present invention is not limited to that according to the above-described exemplary embodiment. All kinds of alterations and changes can be made within the spirit and scope of the invention.

While the power storage system 10 of the above-described exemplary embodiment has been described with reference to two rotary bodies 30 having the same shape and weight, the structure is not limited thereto. That is, it is only required that the power storage system include a pair of rotary bodies that counter rotate so that the rotation periods about the main shaft are synchronized.

Such a structure can cancel out the inertia moments and, thus, reduce the sum of the angular momenta. Accordingly, the inertia force exerted from the power storage system on the moving vehicle having the power storage system mounted therein when the moving vehicle changes its moving direction (the inertia force caused by the rotation of the rotary bodies) can be effectively reduced.

Note that in order to make the sum of the angular momenta of the pair of rotary bodies zero or a value close to zero and make the inertia force exerted from the power storage system on the moving vehicle when the moving vehicle changes its moving direction substantially zero, it is desirable that the shapes and weights of the rotary bodies be the same or substantially the same.

Although the present invention has been fully described in connection with the above exemplary embodiment thereof with reference to the accompanying drawings, it is to be noted that various changes and modifications are apparent to those skilled in the art. Such changes and modifications are to be understood as included within the scope of the present invention as defined by the appended claims, unless they depart therefrom.

## Claims

1. A flywheel power storage system (10) for storing supplied electric power in the form of rotational kinetic energy, comprising:

   a main shaft (12) extending in a certain direction;
   a pair of rotary bodies (30) attached to the main shaft (12), the rotary bodies (30) counter rotating about the main shaft (12);
   a drive unit (40) configured to synchronize rotation periods of the rotary bodies (30) rotating about the main shaft (12) with each other; and
   a stator (20) with both end portions each having the main shaft (12) attached thereto, the main shaft (12) outwardly extending from each of the end portions, the stator (20) being made of a magnetic material,

wherein each of the rotary bodies (30) is made of a magnetic material and has a substantially disk shape extending radially from the main shaft (12) in a direction perpendicular to the main shaft (12), and the rotary bodies (30) are disposed with the stator (20) therebetween, and wherein the drive unit (40) includes a pair of exciting coils (41) each disposed on one of the end portions, the main shaft (12) passes through center core portions of the exciting coils (41), and the exciting coils (41) cause the rotary bodies (30) to generate a rotation force based on a magnetic resistance between the stator (20) and each of the rotary bodies (30) when being excited by input and output of the electric power to and from the flywheel power storage system (10),

**characterized in that**

the stator (20) has a plurality of through-holes (22) that pass therethrough in a direction in which the main shaft (12) extends and that are arranged on a circumference of a circle having the center at the main shaft (12) and a predetermined radius with a spacing therebetween in the circumferential direction, and

each of the rotary bodies (30) has a facing surface (35) that faces the stator (20) and a plurality of protrusions (37, 38) that protrude, toward the stator (20), from the facing surface (35) on the circumference of the circle having the predetermined radius at positions corresponding to the through-holes (22).

2. The flywheel power storage system (10) according to Claim 1, wherein shapes and weights of the rotary bodies (30) are the same or substantially the same.

3. The flywheel power storage system (10) according to Claim 1 or 2, wherein each of the stator (20) and the pair of rotary bodies (30) is formed by pressing soft magnetic powders each coated with an electric insulating film together.

4. The flywheel power storage system (10) according to Claim 3, wherein each of the rotary bodies (30) has a main rotary body (32) that has a substantially disk shape extending radially in a direction perpendicular to the direction in which the main shaft (12) extends and that is made of soft magnetic powders and one of a reinforcing portion formed by tightly winding a belt-like member (42) around an outer peripheral surface of the main rotary body (32) so as to surround the main shaft (12) in the circumferential direction in the form of a single layer or multiple layers and a tubular portion that surrounds the outer peripheral surface from the outer side.

5. The flywheel power storage system (10) according to any one of Claims 1 to 4, wherein each of the exciting coils (41) is formed by winding a belt-like electric conductive wiring member (42) so that a thickness direction of the belt-like electric conductive wiring member (42) is the same as the radial direction of the exciting coil (41).

6. The flywheel power storage system (10) according to Claim 5, wherein the thickness of the band-like conducting wiring member (42) is smaller than a skin depth corresponding to a frequency of an electric current input and output to and from the exciting coil (41).

7. The flywheel power storage system (10) according to any one of Claims 1 to 6, wherein each of the rotary bodies (30) is rotatably attached to the main shaft (12) via one of a magnetic bearing (31) and an air bearing.

8. The flywheel power storage system (10) according to Claim 1 or 2, wherein the drive unit (40) includes a control unit (44) that controls the electric power input and output to and from the exciting coil (41) and a detection unit (43) that detect a rotational speed of each of the rotary bodies (30), wherein the control unit (44) controls an electric current input and output to and from the exciting coil (41) on the basis of the rotational speed detected by the detection unit (43) so as to synchronize rotation periods of the rotary bodies (30) with each other.

**Patentansprüche**

1. Schwungradenergiespeichersystem (10) zum Speichern zugeführter elektrischer Energie in Form von Rotationsenergie, das Folgendes umfasst:

eine Hauptwelle (12), die sich in einer bestimmten Richtung erstreckt;

ein Paar Rotationskörper (30), die an der Hauptwelle (12) befestigt sind, wobei sich die Rotationskörper (30) gegenläufig um die Hauptwelle (12) drehen;

eine Antriebseinheit (40), die ausgestaltet ist, Rotationsperioden der Rotationskörper (30), die sich um die Hauptwelle (12) drehen, miteinander zu synchronisieren; und

einen Stator (20), an dessen beiden Endabschnitten jeweils die Hauptwelle (12) befestigt ist, wobei sich die Hauptwelle (12) von jedem der Endabschnitte nach außen erstreckt, wobei der Stator (20) aus einem Magnetwerkstoff hergestellt ist,

wobei jeder der Rotationskörper (30) aus einem Magnetwerkstoff hergestellt ist und im Wesentlichen eine Scheibenform aufweist, die sich radial von der Hauptwelle (12) in einer Richtung senkrecht zur Hauptwelle (12) erstreckt, und zwischen den Rotationskörpern (30) der Stator (20) angeordnet ist, und

wobei die Antriebseinheit (40) ein Paar Erregerspulen (41) umfasst, die jede an einem der Endabschnitte angeordnet sind, die Hauptwelle (12) mittlere Kernabschnitte der Erregerspulen (41) durchläuft und die Erregerspulen (41) bewirken, dass die Rotationskörper (30) eine Rotationskraft auf Grundlage eines magnetischen Widerstands zwischen dem Stator (20) und jedem der Rotationskörper (30) erzeugen, wenn sie durch Zufuhr und Abgabe der elektrischen Energie zum und vom Schwungradenergiespeichersystem (10) erregt werden,

**dadurch gekennzeichnet, dass**

der Stator (20) eine Vielzahl von Durchgangslöchern (22) aufweist, die in einer Richtung, in der sich die Hauptwelle (12) erstreckt, durch ihn hindurch verlaufen und die auf einem Umfang eines Kreises angeordnet sind, dessen Mitte sich an der Hauptwelle (12) befindet und der einen vorbestimmten Radius mit einem Abstand dazwischen in Umfangsrichtung aufweist, und jeder der Rotationskörper (30) eine dem Stator (20) zugewandte Oberfläche (35) und eine Vielzahl von Vorsprüngen (37, 38), die von der zugewandten Oberfläche (35) auf dem Umfang des Kreises mit dem vorbestimmten Radius an Stellen, die den Durchgangslöchern (22) entsprechen, in Richtung des Stators (20) hervorstehen, aufweist.

2. Schwungradenergiespeichersystem (10) nach Anspruch 1, wobei Formen und Gewichte der Rotationskörper (30) gleich oder im Wesentlichen gleich sind.

3. Schwungradenergiespeichersystem (10) nach Anspruch 1 oder 2, wobei sowohl der Stator (20) als auch das Paar Rotationskörper (30) durch Zusammenpressen von weichmagnetischen Pulvern gebildet werden, wobei jeder mit einem elektrisch isolierenden Film beschichtet wird.

4. Schwungradenergiespeichersystem (10) nach Anspruch 3, wobei jeder der Rotationskörper (30) einen Hauptrotationskörper (32) aufweist, der im Wesentlichen eine Scheibenform aufweist, die sich radial in einer Richtung senkrecht zu der Richtung, in der sich die Hauptwelle (12) erstreckt, erstreckt und der aus weichmagnetischen Pulvern hergestellt ist und eines von einem verstärkenden Abschnitt, der durch festes Wickeln eines riemenartigen . Elements (42) um eine äußere Umfangsfläche des Hauptrotationskörpers (32) gebildet ist, um die Hauptwelle (12) in der Umfangsrichtung in Form einer einzelnen Schicht oder mehrerer Schichten zu umschließen, und einem rohrförmigen Abschnitt, der die äußere Umfangsfläche von der äußeren Seite umschließt, aufweist.

5. Schwungradenergiespeichersystem (10) nach einem der Ansprüche 1 bis 4, wobei jede der Erregerspulen (41) durch Wickeln eines riemenartigen elektrisch leitfähigen Verdrahtungselements (42) gebildet ist, so dass eine Dickenrichtung des riemenartigen elektrisch leitfähigen Verdrahtungselements (42) die gleiche ist wie die radiale Richtung der Erregerspule (41).

6. Schwungradenergiespeichersystem (10) nach Anspruch 5, wobei die Dicke des bandartigen leitenden Verdrahtungselements (42) kleiner ist als eine Eindringtiefe, die einer Frequenz eines elektrischen Stroms, der in die und aus der Erregerspule (41) ein- und ausgegeben wird, entspricht.

7. Schwungradenergiespeichersystem (10) nach einem der Ansprüche 1 bis 6, wobei jeder der Rotationskörper (30) mittels einem von einem Magnetlager (31) und einem Luftlager drehbar an der Hauptwelle (12) befestigt ist.

8. Schwungradenergiespeichersystem (10) nach Anspruch 1 oder 2, wobei die Antriebseinheit (40) eine Steuer- bzw. Regeleinheit (44), die die elektrische Energie, die in die und aus der Erregerspule (41) ein- und ausgegeben wird, steuert bzw. regelt und eine Erfassungseinheit (43), die eine Rotationsgeschwindigkeit von jedem der Rotationskörper (30) erfasst, umfasst,

wobei die Steuer- bzw. Regeleinheit (44) einen elektrischen Strom, der der Erregerspule (41) zugeführt und von dieser ausgegeben wird, auf Grundlage der Rotationsgeschwindigkeit, die durch die Erfassungseinheit (43) erfasst wird, steuert bzw. regelt, um die Rotationsperioden der Rotationskörper (30) miteinander zu synchronisieren.

**Revendications**

1. Système de stockage d'énergie par volant d'inertie (10) pour stocker de l'énergie électrique fournie sous la forme d'une énergie cinétique de rotation, comprenant :

un arbre principal (12) s'étendant dans une certaine direction ;
une paire de corps rotatifs (30) fixés à l'arbre principal (12), les corps rotatifs (30) tournant en sens inverse autour de l'arbre principal (12) ;
une unité d'entraînement (40) conçue pour synchroniser les périodes de rotation des corps rotatifs (30) tournant autour de l'arbre principal (12) l'un avec l'autre ; et

un stator (20) avec les deux parties d'extrémité ayant chacune l'arbre principal (12) fixé à celui-ci, l'arbre principal (12) s'étendant vers l'extérieur depuis chacune des parties d'extrémité, le stator (20) étant constitué d'un matériau magnétique,

dans lequel chacun des corps rotatifs (30) est constitué d'un matériau magnétique et est sensiblement en forme de disque s'étendant radialement depuis l'arbre principal (12) dans une direction perpendiculaire à l'arbre principal (12), et les corps rotatifs (30) sont placés avec le stator (20) entre les deux, et

dans lequel l'unité d'entraînement (40) comprend une paire de bobines d'excitation (41), chacune placée sur une des parties d'extrémité, l'arbre principal (12) passe par les parties du noyau central des bobines d'excitation (41), et les bobines d'excitation (41) amènent les corps rotatifs (30) à générer une force de rotation basée sur une résistance magnétique entre le stator (20) et chacun des corps rotatifs (30) lorsqu'elles sont excitées par l'entrée et la sortie de l'énergie électrique vers et depuis le système de stockage d'énergie par volant d'inertie (10), **caractérisé en ce que**

le stator (20) a une pluralité de trous traversants (22) qui passent à travers celui-ci dans une direction dans laquelle l'arbre principal (12) s'étend et qui sont placés sur une circonférence d'un cercle avec un centre à l'arbre principal (12) et un rayon prédéfini avec un espace entre les deux dans une direction circonférentielle, et chacun des corps rotatifs (30) a une surface en regard (35) qui fait face au stator (20) et une pluralité de protubérances (37, 38) qui font saillie, vers le stator (20), depuis la surface en regard (35) sur la circonférence du cercle ayant le rayon prédéfini à des positions qui correspondent aux trous traversants (22).

2. Système de stockage d'énergie par volant d'inertie (10) selon la revendication 1, dans lequel les formes et les poids des corps rotatifs (30) sont les mêmes ou sensiblement les mêmes.

3. Système de stockage d'énergie par volant d'inertie (10) selon la revendication 1 ou 2, dans lequel chacun du stator (20) et de la paire de corps rotatifs (30) est formé par pressage de poudres magnétiques douces, chacune revêtue d'une pellicule d'isolation électrique ensemble.

4. Système de stockage d'énergie par volant d'inertie (10) selon la revendication 3, dans lequel chacun de corps rotatifs (30) a un corps rotatif principal (32) qui est sensiblement en forme de disque s'étendant radialement dans une direction perpendiculaire à la direction dans laquelle l'arbre principal (12) s'étend et qui est constitué de poudres magnétiques douces et un d'une partie de -renforcement formée en enroulant de façon serrée un élément de type courroie (42) autour une surface périphérique extérieure du corps rotatif principal (32) de manière à entourer l'arbre principal (12) dans la direction circonférentielle sous la forme d'une couche unique ou de couches multiples et d'une partie tubulaire qui entoure la surface périphérique extérieure depuis le côté extérieur.

5. Système de stockage d'énergie par volant d'inertie (10) selon l'une quelconque des revendications 1 à 4, dans lequel chacune des bobines d'excitation (41) est formée en enroulant un élément de câblage électroconducteur de type courroie (42) de sorte qu'une direction épaisseur de l'élément de câblage électroconducteur de type courroie (42) est la même que la direction radiale de la bobine d'excitation (41).

6. Système de stockage d'énergie par volant d'inertie (10) selon la revendication 5, dans lequel l'épaisseur de l'élément de câblage électroconducteur de type bande (42) est plus petite qu'une profondeur de revêtement correspondant à une fréquence d'une entrée et d'une sortie de courant électrique vers et depuis la bobine d'excitation (41).

7. Système de stockage d'énergie par volant d'inertie (10) selon l'une quelconque des revendications 1 à 6, dans lequel chacun des corps rotatifs (30) est fixé de manière rotative à l'arbre principal (12) par l'un d'un palier magnétique (31) et d'un palier pneumatique.

8. Système de stockage d'énergie par volant d'inertie (10) selon la revendication 1 ou 2, dans lequel l'unité d'entraînement (40) comprend une unité de commande (44) qui commande l'entrée et la sortie d'énergie électrique vers et depuis la bobine d'excitation (41) et une unité de détection (43) qui détecte une vitesse de rotation de chacun des corps rotatifs (30), dans lequel l'unité de commande (44) commande une entrée et une sortie de courant électrique vers et depuis la bobine d'excitation (41) sur la base de la vitesse de rotation détectée par l'unité de détection (43) de manière à synchroniser les périodes de rotation des corps rotatifs (30) les unes avec les autres.

# FIG. 1

# FIG. 2

# FIG. 3

## FIG. 4

# FIG. 5

FIG. 6

FIG. 7A

FIG. 7B

FIG. 7C

# FIG. 8

# FIG. 9

**EP 2 728 716 B1**

## REFERENCES CITED IN THE DESCRIPTION

**Patent documents cited in the description**

- JP 10285834 A
- JP 2005065411 A
- US 5721461 A
- JP H10281050 A
- WO 8604191 A1